(19) Europäisches Patentamt

European Patent Office

Office européen des brevets

(11) Publication number: **0 097 221**
**B1**

(12) **EUROPEAN PATENT SPECIFICATION**

(45) Date of publication of patent specification: **20.05.87**

(51) Int. Cl.⁴: **G 11 B 23/50, G 11 B 23/02**

(21) Application number: **83101850.2**

(22) Date of filing: **25.02.83**

(54) Rigid floppy disk cartridge.

(30) Priority: **22.06.82 US 391060**

(43) Date of publication of application:
**04.01.84 Bulletin 84/01**

(45) Publication of the grant of the patent:
**20.05.87 Bulletin 87/21**

(84) Designated Contracting States:
**AT BE CH DE FR GB IT LI NL SE**

(56) References cited:
**EP-A-0 085 165**
**DE-A-3 042 446**
**FR-A-2 072 171**
**FR-A-2 083 970**
**FR-A-2 189 810**
**FR-A-2 326 003**
**FR-A-2 420 812**
**US-A-3 684 755**
**US-A-4 149 207**

(73) Proprietor: **International Business Machines
Corporation
Old Orchard Road
Armonk, N.Y. 10504 (US)**

(72) Inventor: **Beck, John Lowell
P.O. Box 162 813 1st Avenue NW
Byron Minnesota 55920 (US)**
Inventor: **Bornhorst, Randy Joseph
3549 3rd Place NW
Rochester Minnesota 55901 (US)**
Inventor: **Smith, Donald Jay
P.O. Box 61 622 3rd Avenue NE
Byron Minnesota 55920 (US)**
Inventor: **Zell, Michael Norman
3524 Ogden Court NE
Rochester Minnesota 55901 (US)**

(74) Representative: **Petersen, Richard Courtenay
IBM Svenska AB Patent Operations Box 962
S-181 09 Lidingö (SE)**

Courier Press, Leamington Spa, England.

# Description

This invention relates to rigid floppy disk cartridges comprising a rigid jacket housing a flexible magnetic recording disk.

The use of a floppy disk as a rotating magnetic recording medium is well known. More specifically, a single disk is known to be permanently encased in a protective jacket. The disk rotates within the jacket, as the jacket is held stationary.

While flexible diskette devices have proved to be very useful, certain problems have been encountered. A flexible plastic jacket is provided to protect the disk, but its ability to do so is limited by the nature of the material from which the jacket is made. The disk can be dented when a sharp object falls on the envelope. Users have also wrapped the jacket and disk about a related computer printout, causing the flexible assembly to warp permanently. Another common problem is fingerprint oil on the recording surface of the disk.

In addition, centring and clamping of the disk occurs while the disk is constrained somewhat from sideways movement. This can lead to poor centering, and/or damage to the disk in the vicinity of its central mounting opening. This same movement constraint can cause the rotational torque required to change from one diskette to another, and/or can product inconsistent head-to-disk compliance.

In its generic form, a prior art disk jacket includes two generally central apertures, located in aligned fashion, in the opposite flat surfaces of the jacket. These openings allow access to the central aperture of the disk, so that the disk may be clamped and rotated within the stationary jacket. Other jacket openings or slots allow access for a magnetic transducing head or heads which reads or writes onto the magnetic recording layer or layers of the moving disk.

The disk may be clamped to a motor by means of a rigid hub which is permanently attached to the disk. However, for economic reasons it is preferred that the disk drive include a spindle and collet which close onto and clamp the flexible disk at the location of the central aperture of the disk.

The art of floppy disk rotating magnetic memory or recording devices has long recognized the need to include a means for cleaning the disk as it rotates within its stationary jacket.

US—A—3,668,658, GB—A—1260637, FR—A—2072171 and DE—A—2063194 show a flexible disk permanently enclosed in a protective flexible cover, envelope or jacket. The two inner jacket surfaces, which confront the opposite planar surfaces of the flexible disk, include a solid, porous, antistatic cleaning material. This material is in continuous frictional contact with the adjacent surfaces of the disk. As the disk rotates, this material operates to clean the disk. The use of a head load-unload pinch pad is suggested which pad pinches the flexible outer surfaces of the jacket together to provide additional disk cleaning action by the inner porous layers. US—A—4,038,693, GB—A—1494987, FR—A—2326003 and DE—A—2634501, show such a pinch pad, which is force-loaded into the side of the flexible disk jacket only after the disk has been centred and clamped by the spindle/collet mechanism of the disk drive.

US—A—3,864,755 discloses a flexible disk encased within a jacket formed of a relatively rigid, flat, first cover, to which a thin second cover is deformed, to provide a cavity coextensive with the circumferential outer edge of the flexible disk. This cavity is fully lined by two wiper layers which always engage the opposite flat surfaces of the disk.

It has been proposed to place a flexible disk in a protective rigid jacket having two rigid walls in US—A—4,149,207, GB—A—2007005, FR—A—2407546 and DE—A—2839277 where the flexible disk carries a drive hub, as contrasted to the drive interface to the disk being formed by releasably clamping the flexible disk material itself. There is a relatively thick cavity for the disk, and a pair of oppositely disposed, protruding wiper elements continuously engage the opposite planar surfaces of the disk, tending to maintain the disk centred within the thick cavity.

EP—A—85165 published 10.8.83, with a priority of 28.1.82 also discloses a flexible disk placed in a protective rigid jacket having two rigid walls. In this device, the two rigid jacket halves are identical in that both contain a head access opening and both contain a 90° displaced, internally projecting boss which controls a disk cleaning material on its upper surface. When the two jacket halves are assembled, the access openings are 90° displaced from each other. The boss of one jacket half is then opposite the access opening of the other jacket half, and both sides of the disk are wiped, as each boss provides a pressure force for a magnetic head.

Where the relatively fragile flexible disk material is itself clamped to the spindle/collet mechanism of the disk drive, the construction and arrangement either provides no cleaning capability, or when cleaning is provided, the cleaning means continuously engages the disk, and prevents free sideways movement of the disk during clamping.

This lack of free disk movement during clamping can result in damage to the relatively fragile disk in the vicinity of its central opening. In addition, inaccurate centring of the disk about the spindle of the drive may occur. It is conventional in disk drives of the floppy disk type merely to position the head where a disk track should be and where the track will be if the disk is accurately centred. As a result of the aforementioned lack of free disk movement during clamping, the disk tracks may be mislocated relative the head.

The present invention provides a rigid jacket/flexible disk cartridge wherein the disk is free to move sideways during clamping, and only thereafter is a cartridge cleaning surface moved against the planar surface of the disk.

Accordingly, a rigid, floppy disk cartridge comprises a rigid jacket defining a flat, substantially closed cavity, the jacket including a through-hole and at least one head-receiving aperture in a flat portion of the housing, a generally flat floppy disk nonremovably loosely housed within the cavity, the disk including a mounting aperture aligned with the through-hole, but smaller in dimension than the through-hole, and a rigid, movable disk cleaning member formed as a part of the rigid jacket, the cleaning member being normally spaced from the disk and being adapted to be moved into the cavity and into cleaning contact with the disk.

More specifically, the rigid cartridge provides a relatively thick cavity which loosely houses a flexible magnetic recording disk in its flat state. At least one rigid cartridge wall includes a movable disk-cleaning surface which is normally spaced away from the disk. Thus, when the cartridge is placed in a disk drive, the spindle/collet mechanism of the disk drive first operates to centre and clamp the disk to the drive motor. Due to the construction and arrangement of the present invention, the flexible disk is entirely free to move during centering and collet clamping. That is, no force resists disk lateral movement which may be necessary during this operation. As a result, distorting and/or damage to the disk is minimized, and the data tracks are accurately centred to the disk rotation axis.

Once the disk is properly centred and clamped, a pin moves into engagement with the movable disk-cleaning member and moves this surface into cleaning engagement with the disk.

The location of the disk-cleaning surface, relative the head-receiving slot, is not critical.

When the disk and its disk drive are constructed and arranged for double side recording, a head-receiving slot is provided on each side of the cartridge.

In one embodiment of the present invention the rigid outer jacket is formed of two rigid plastics members, one of which includes a movable cleaning member which is pressure-flexed into the disk by virtue of a hinge-like reduction in thickness of a portion of the outer jacket.

In another embodiment, the movable cleaning member is a loose, rigid plastics piece. This piece is loosely held in place by overhanging walls and internally projecting, fence-like walls, which prevent the piece from leaving its proper position in the plastics external wall, but yet allows the piece to be pressed against the disk, in cleaning cooperation therewith.

The scope of the invention is defined by the appended claims; and how it can be carried into effect is hereinafter particularly described with reference to the accompanying drawings, in which:—

FIGURE 1 is a top view of an embodiment of rigid magnetic recording disk cartridge according to the present invention;

FIGURE 2 is a bottom view of the cartridge of Fig. 1;

FIGURE 3 illustrates the manner in which a cartridge wall opening co-operates with a disk-drive-mounted pin, to properly locate the cartridge within the disk drive;

FIGURE 4 is a view of the inside of the top wall of the cartridge;

FIGURE 5 is a view of the inside of the bottom wall of the cartridge;

FIGURE 6 is a view of that portion of the bottom wall which includes a movable cleaning member;

FIGURE 7 is a partial section view on the line VII—VII of Fig. 1;

FIGURE 8 is a view similar to Fig. 4, of another embodiment of the invention;

FIGURE 9 is a view similar to Fig. 5, of the embodiment of Fig. 8;

FIGURE 10 is a partial view of the inside of the bottom wall of a further embodiment of the invention:

FIGURE 11 is a partial section on the line XI—XI of Fig. 10.

FIGURE 12 is a partial perspective view of yet another embodiment of the invention;

FIGURE 13 shows a flexible disk drive with a cartridge according to the invention prior to insertion; and

FIGURE 14 is a top view of the disk drive of Fig. 13, with certain parts removed.

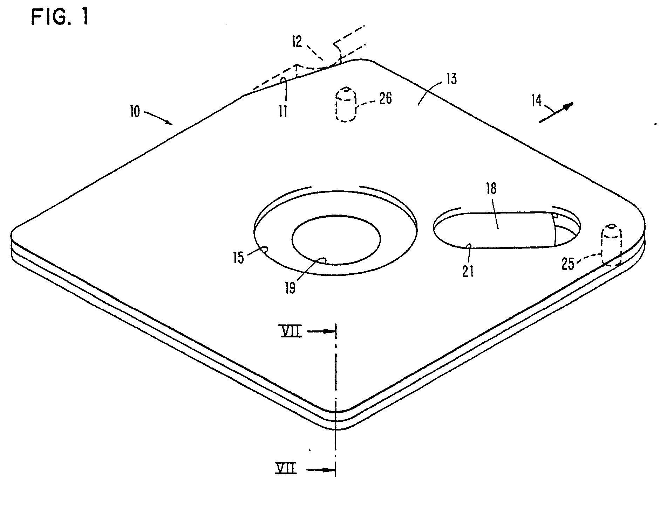

A preferred embodiment of rigid magnetic recording disk cartridge 10 (Fig. 1) according to the present invention is a rigid plastics jacket or envelope, preferably formed of an opaque polycarbonate, about 0.5 cm thick and 10 cm square. In one corner, the cartridge 10 has a tapered boundary edge 11, constructed and arranged to co-operate with a stationary wall portion 12 of a disk drive with which the cartridge is used. Edge 11 and wall portion 12 co-operate so that the cartridge cannot be incorrectly inserted in the drive, as the cartridge is moved in direction 14.

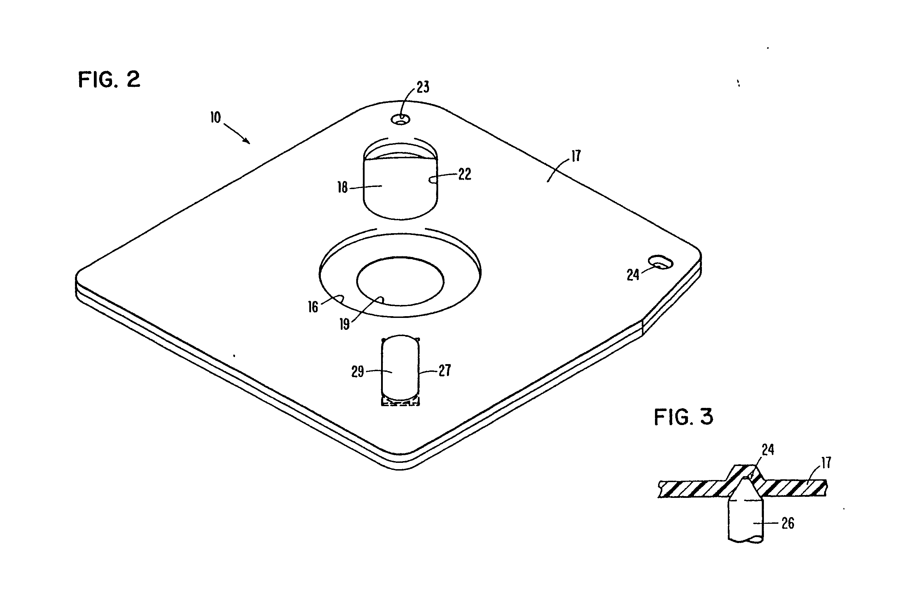

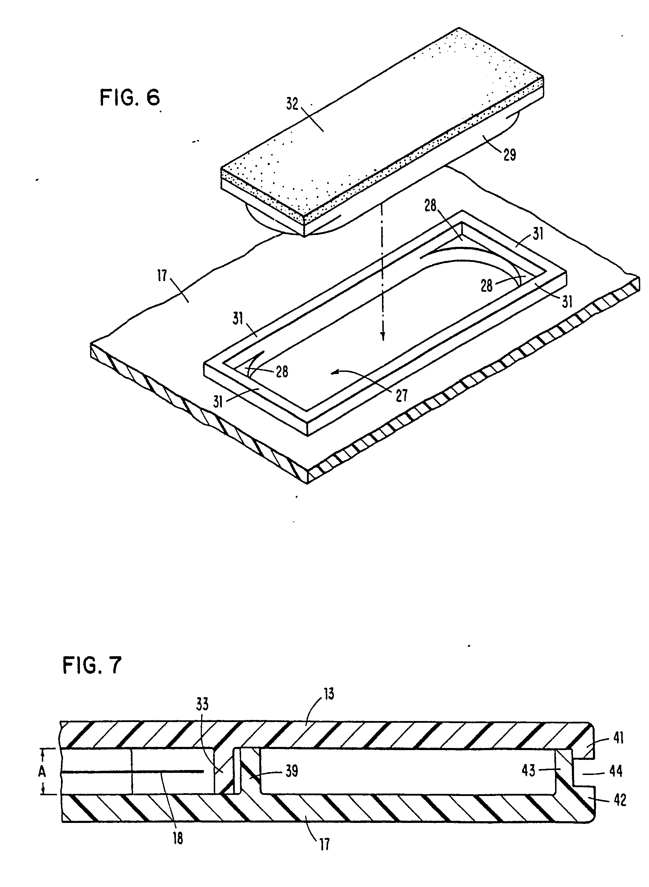

The cartridge 10 has a flat top wall 13 which includes a centrally located circular aperture 15 aligned with a similar aperture 16 (Fig. 2) formed in a flat bottom wall 17. These two apertures receive a stationary spindle and movable collet of the disk drive. A flexible magnetic recording disk 18, of the well known "floppy" type, is loosely captured within an inner cavity formed between the walls 13 and 17 of the cartridge. The disk 18 is about 0.075 mm thick. The disk 18 is of thin flexible magnetic recording medium, and includes a central, circular, mounting aperture 19 whose peripheral boundary may be clamped between the collet and spindle by the disk drive mechanism. When so clamped, circular data tracks on the disk are concentric with the central axis of the aligned apertures 15 and 16, and the disk may spin about this axis and assumes a flat spin-plane perpendicular to this axis (Fig. 7).

The two opposing walls 13 and 17 includes radially directed, aligned openings or slots 21 and 22, respectively, to enable a magnetic head assembly of the disk drive to obtain access to the data tracks on the disk 18. Floppy disk drives may have but a single magnetic head, or may have two such heads, one located on each side of the disk.

In the event that a single head is used, it preferably enters slot 22 formed in the bottom wall 17 of the cartridge whilst a felt-like pressure pad enters slot 21. In this way, the spinning disk is trapped between the pad and the head. In a preferred construction, the head backup pad spans substantially the entire length of the slot 21, and the opposing head incrementally moves along a radius of the disk the length of the slot 22, as the pad remains stationary. This head/pad arrangement is described in EP—A—26837.

Slots 21 and 22 are about 1.5 cm wide and 3 cm long. It has been found that this size slot, in combination with the 0.5 cm thickness of the cartridge, substantially prevents physical contact with the recording surface or surfaces of disk 18, even when an operator inadvertently grabs the cartridge in the general location of slots 21 and 22.

The common central axis of apertures 15 and 16 defines the spin axis of disk 18. Only when disk aperture 19 is concentric with this axis will the data tracks on the disk be properly located, as the magnetic head of the disk drive moves to transduce a given data track. While track following servo techniques can be used to follow the data tracks of an improperly located disk, it is preferred that less expensive open-loop positioning of the head be employed.

For this reason, means is provided accurately to locate the common central axis of the apertures 15 and 16 within the disk drive. For this purpose, a round, tapered-wall hole 23 and a tapered-wall slot 24 are formed in the bottom wall 17. The disk drive has with a stationary tapered-top post 25 (Fig. 1) and a stationary tapered-top post 26 (Figs. 1 and 3). When a cartridge 10 is properly located within the disk drive, pin 25 enters hole 23, and the cartridge rotates slightly about pin 25, as tapered post 26 centres itself on the tapered walls of slot 24 (Fig. 3).

In the preferred embodiment of the present invention the bottom wall 17 includes a radially directed aperture 27 (Figs. 2, 5 and 6) which is 180° displaced from slot 22. The aperture 27 is round-ended and surrounded by a rectangular upstanding wall 31 leaving corner pieces 28 in the corners. The wall 31 is about 0.6 mm about the adjacent surface of the wall 17. The four corner pieces 28 are of the same thickness as the wall 17. A plastics housing piece 29 (Fig. 6) is trapped within aperture 27 and wall 31, and carries a piece 32 to operate as a disk cleaning member. The lower outer surface of housing piece 29 is flush with the outer lower surface of the wall 17, closing the aperture 27, and the upper part of the housing piece 29 fits within the wall 31 so that the four corner pieces 28 prevent the piece 29 falling out of the aperture 27. The housing piece when resting on the corner pieces 28 has its inner surface flush with the top of wall 31.

The pad 32 is of a porous, low friction dusting fabric and is bonded to the entire upper surface of the piece 29. This pad spans a radial distance of the disk which is at least coincident with the portion of the disk which carries the data tracks, and is normally spaced away from the spin-plane of disk 18. The pad 32 is about 0.25 mm thick.

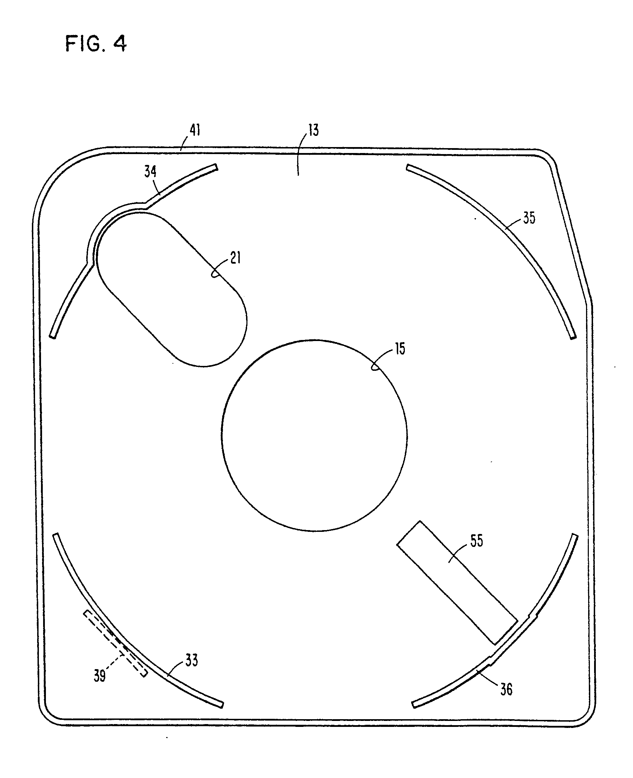

The top wall 13 (Fig. 4) has a slightly raised rectangular surface 55 opposite the movable cleaning member. Surface 55 extends only slightly above the interior surface of top wall 13 and carries cleaning fabric (not shown) to contact the adjacent disk surface only when the pad 32 of the cleaning member in the wall 17 is force-loaded onto the opposite side of the disk. The fabric is about 0.25 mm thick and the surface 55 about 0.3 mm above the adjacent surface of the wall 13. The top wall 13 (Fig. 4) also includes four upstanding curved walls 33, 34, 35 and 36 which define a disk-receiving cavity having a circular boundary. These four walls are flat on top, and extend upward so as to snugly fit against the interior flat surface of bottom wall 17, when the two halves are assembled together (Fig. 7).

When so assembled, the opposed surfaces of the walls 13 and 17 are separated by a distance A equal to about 2.2 mm.

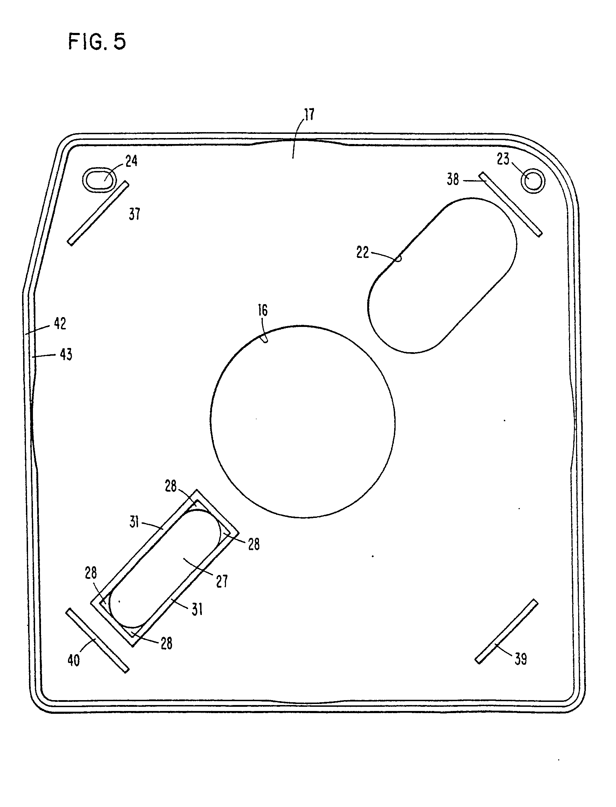

Bottom wall 17 (Fig. 5) also includes four upstanding straight walls 37, 38, 39 and 40. These walls are generally of the same height as walls 33 to 36, but they are spaced a greater distance from the common centre of apertures 15, 16 than are walls 33 to 36. As a result, the top surfaces of walls 37 to 40 snugly engage the inner surface of top half 13, when the two halves are assembled together (Fig. 7). Due to the greater radial spacing of walls 37 to 40, these walls engage the interior surface of the top half outside the disk cavity defined by walls 33 to 36. Walls 37 to 40 provide a means whereby the two cartridge walls are joined together, preferably by ultrasonic welding, in a manner which ensures that no debris or the like will be produced in the disk cavity, and no flash or the like will be left on the periphery of the disk cavity. To facilitate ultrasonic welding, the top surfaces of walls 37 to 40 each contain a knife edge which causes the wall to be slightly higher than walls 33 to 36 prior to welding, and to be reduced to the same height after welding.

The dotted outline of wall 39 (Fig. 4) shows its position relative to the wall 33, which is similar for the other three walls, once the two walls 13 and 17 are assembled.

Top cartrdige wall 13 (Fig. 4) includes an upstanding boundary wall 41 which completely encircles the cartridge. The height of wall 41 is less than the height of walls 33 to 36 (Fig. 7).

Bottom cartridge wall 17 also includes an upstanding boundary wall (Fig. 7). However, in this case the wall includes a first low portion 42 and a second high portion 43. The height of wall portion 42 is substantially equal to the height of portion 41. The height of wall portion 43 equals the height of walls 37 to 40. As a result, wall portion 43 engages the inner surface of top cartridge wall 13 just inward of the border wall 41. Thus, the edge of the cartridge can be sealed, leaving a centre-located, peripheral recess 44 encircling the edge of the cartridge.

Parts of wall portion 43, located at the four corners of the cartridge, are provided with an upstanding knife edge in order to concentrate the energy of ultrasonic welding. After welding, the height of these upstanding portions is reduced to that of the walls 33 to 36.

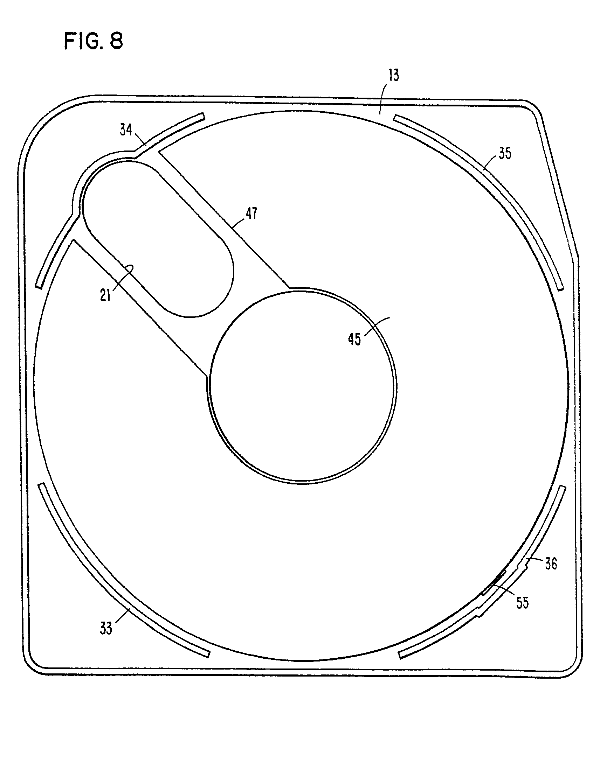

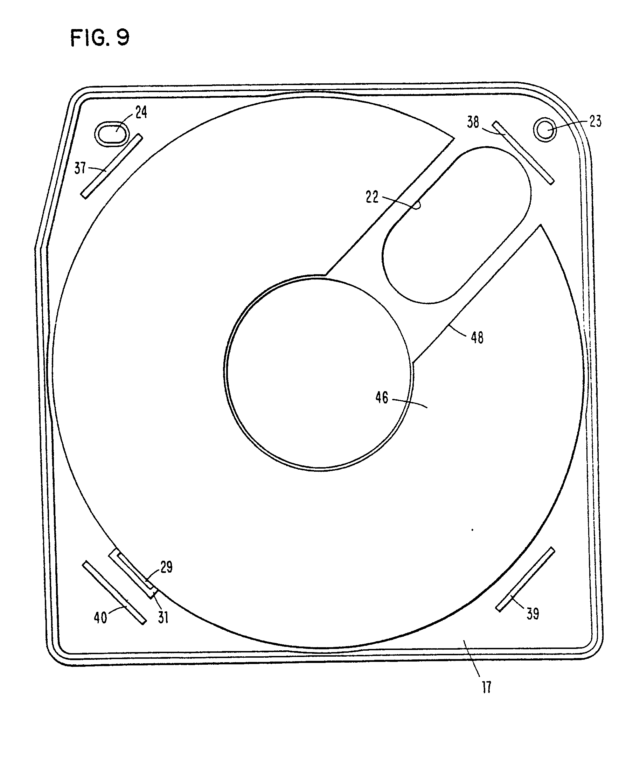

In an alternative embodiment (Figs. 8 and 9), the pads are replaced by broken annular pieces 45 and 46 of porous, low friction dusting fabrics. The fabric pieces 45 and 46 are glued to the inner surfaces of cartridge walls 13 and 17, respectively, for example by the use of a matrix of glue dots. The fabric piece 46 is not glued in the general vicinity of wall 31 and piece 29. Thus, loose wall piece 29 can operate to push the fabric against the disk surface.

A suitable dusting fabric is manufactured by The Kendall Company and is designated Kendall 9030. The functioning of such a fabric in a flexible cartridge for a flexible disk is described in US—A—3,668,658.

Advantageously, a uniform thickness, flat, thin layer of electrically conductive, nonporous material may be interposed between the inner plastics surfaces of the cartridge walls and the fabric pieces, as by vacuum deposit of a metal, in accordance with the teachings of US—A—4,038,693. In addition, it may be desirable to impregnate each of the fabric pieces 45 and 46 with an antistatic material.

Gaps 47 and 48 which are formed in the fabric pieces 45 and 46 are wider than the mating cartridge slots 21 and 22, respectively, thereby to prevent loose fabric fibres from extending into the cartridge slots, as disclosed in US—A—4,263,634.

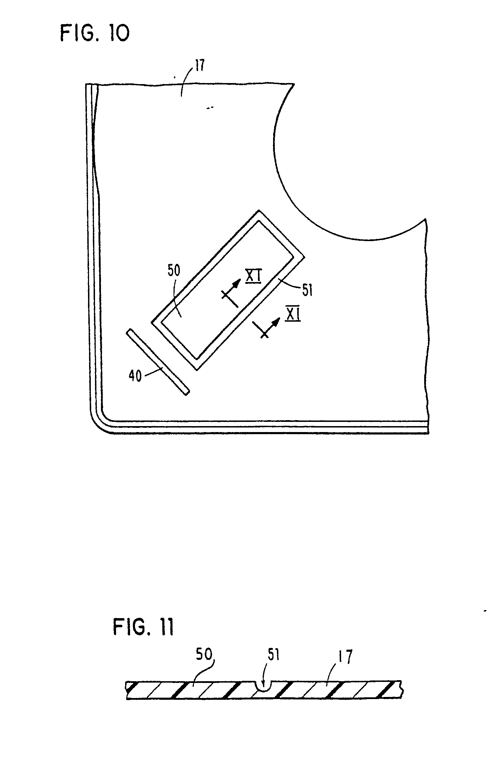

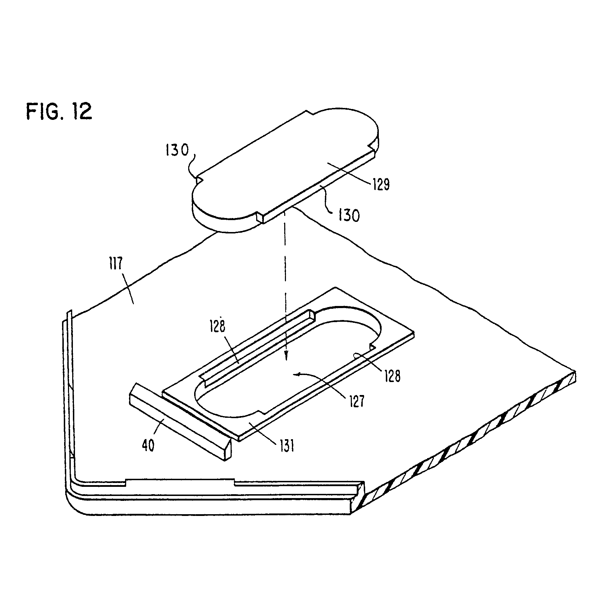

In another alternative embodiment (Figs. 10 and 11), the bottom cartridge wall 17 carries a movable disk cleaning member 50 integral therewith. In this case, member 50 can be forced out of the plane of the cartridge wall by virtue of a reduced-thickness hinge 51 which is moulded into the flat surface of wall 17. When the cartridge wall 17 is so constructed, the broken annular mating piece of cleaning fabric again is not glued in the area of member 50 and hinge 51, so that inward movement of member 50, into its disk-cleaning position, forces that portion of the fabric against the surface of disk 18.

In yet another alternative embodiment (Fig. 12), a bottom cartridge wall 117 has an aperture 127 surrounded by a wall 131. Wall 131 extends about 0.6 mm above the adjacent internal surface of the wall 117. The wall 131 includes two recesses which define overhanging walls 128. Walls 128 are recessed from the top of wall 131 so as to trap a mating plastics piece 129 within the assembled cartridge. The inner surface of piece 129 is again flush with the top of wall 131 when piece 129 is in place, and piece 129 includes extending 130 which mate with the two recesses in wall 131.

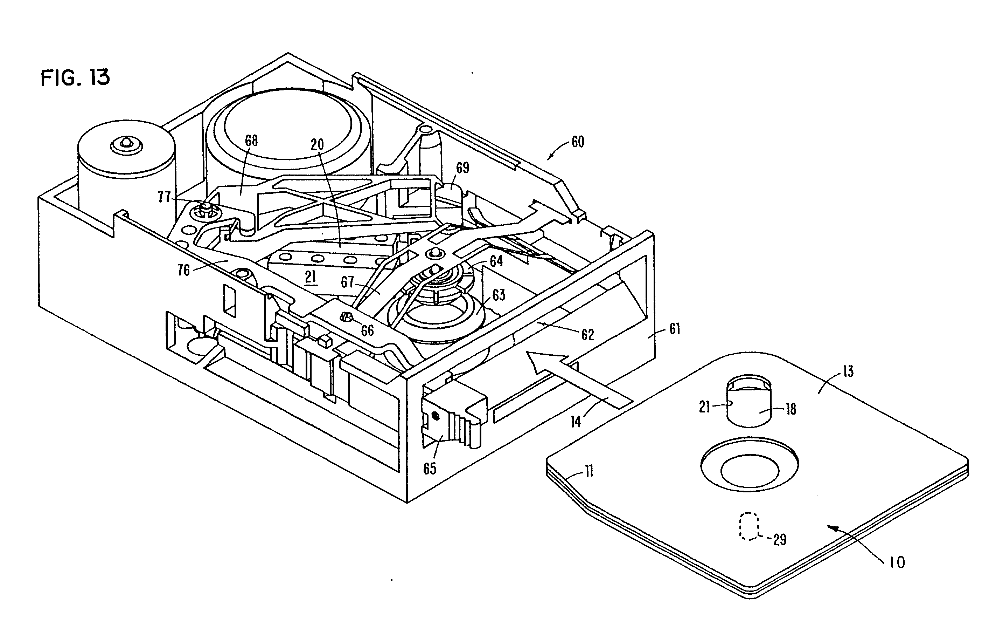

Any of the afore-described cartridges may be used in a flexible disk drive 60 (Fig. 13). The disk drive includes a front decorative panel 61 having a slot 62 adapted to receive the cartridge 10.

Spindle 63 and collet 64 operate to clamp disk 18, as collet 64 lowers onto the spindle due to operation of manual handle 65. Movement of handle 65 to the right causes arm 76 to pivot about pivot point 77. Movement of handle 65 to the right also causes member 66 to push down on a ramp portion 67 of a spring which supports the collet. Spindle 63 is rotatable by a motor (not shown) which is mounted on the bottom of the disk drive. In this manner, the closed spindle/collet assembly rotates about a disk spin axis which is normal to the flat spin plane of the disk.

Arm 68 carries a felt-like pad on the underside of its portion 69. This pad is lowered by operation of handle 65 so that the pad co-operates with cartridge aperture 21. Directly beneath this pad is a magnetic head (not shown) which moves parallel to the spin plane, and generally on a radius of the disk. Detail of the head mounting means, including support arms is disclosed in EP—A—85165.

Movement of handle 65 to the left also operates to control a movable force member which engages and pushes upon the cleaning piece 29 of cartridge 10 (or cleaning member 50 or cleaning piece 129, as the case may be), but only after the spindle/collet assembly has closed to clamp the disk. Likewise, arm 68 does not lower its pad onto the disk until the spindle/collet assembly has closed.

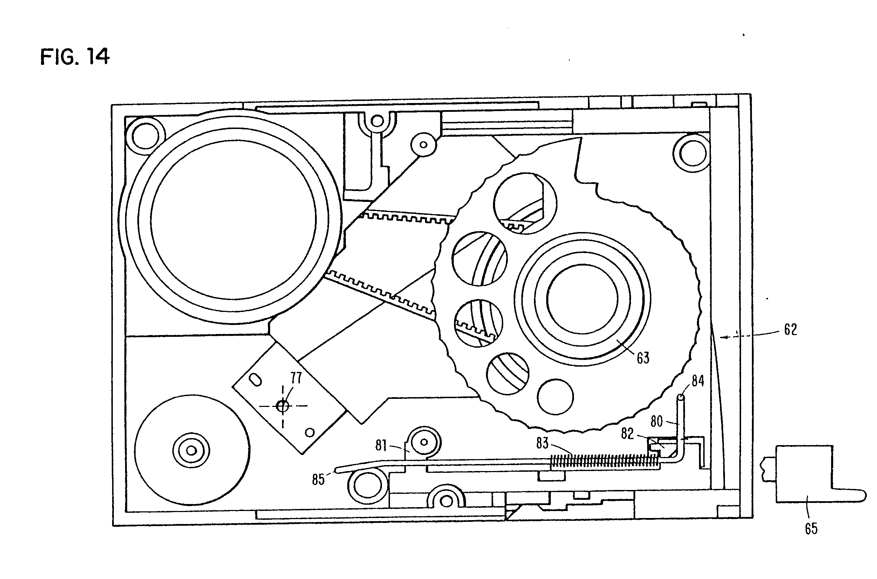

In Fig. 14, certain components have been removed in order to show movable force member 80 which actuates the cleaning member. This force member comprises a bent metal rod which pivots on a horizontal axis defined by bearing blocks 81 and 82. Coil spring 83 encircles a midportion of the metal rod and biases a vertically upward extending end pin 84 to a position where pin 84 engages the cleaning member and effects cleaning of the spinning flexible disk. However, when handle 65 is in the position shown in Fig. 14, a cam surface (not shown) carried by the pivoted end of arm 76 (Fig. 13) engages a vertically downward extending end pin 85, thereby causing the metal rod to rotate clockwise (as viewed from the front), thereby lowering end pin 84 out of engagement with the cleaning member.

There has been disclosed a protective rigid jacket for nonremovably holding a thin, flat, flexible disk of magnetic recording medium, while facilitating access to the disk for clamping the disk to a rotational prime mover, and also facilitating access to the disk by a magnetic transducing head, and comprising flat, rigid, wall members which are spaced to define a relatively thick cavity loosely holding the disk, a stationary, porous, low friction dusting fabric lining one flat surface of the cavity, and a movable wall piece movably controlling a second porous, low friction dusting fabric located on the opposite flat surface of the cavity, whereby selective movement of the movable wall piece enables the disk to be trapped between the two dusting fabrics after the disk has been clamped to the prime mover.

## Claims

1. A rigid floppy disk cartridge (10) comprising a rigid jacket (13, 17) defining a flat, substantially closed cavity, the jacket including a through-hole (15, 16) and at least one head-receiving aperture (21, 22) in a flat portion of the housing, a generally flat floppy disk (18) nonremovably loosely housed within the cavity, the disk including a mounting aperture (19) aligned with the through-hole, but smaller in dimension than the through-hole, and a rigid, movable disk cleaning member (29; 50; 129) formed as a part of the rigid jacket, the cleaning member being spaced from the disk when the cartridge is not engaged in the disk drive mechanism and being adapted to be moved into the cavity and into cleaning contact with the disk. When the cartridge is engaged in the disk drive mechanism.

2. A cartridge according to claim 1, in which the disk cleaning member (29; 129) comprises a loose, rigid housing piece which has a cleaning surface (32; 46) on the side thereof facing the cavity, the rigid housing having an aperture (27; 127) closed by the housing piece, the housing piece being constrained from movement out of the aperture by confining housing surfaces (28; 128) formed in the rigid jacket.

3. A cartridge according to claim 2, in which the surfaces (28; 128) of the rigid housing which confine the housing piece overhang the aperture (27; 127) to trap the piece in the aperture.

4. A cartridge according to claim 1, in which the disk cleaning member (50) comprises a rigid housing piece which co-operates with a cleaning surface (32; 46) on the side thereof facing the cavity, the housing piece being connected to the rigid jacket by a reduced-thickness hinge (51).

5. A cartridge according to claim 1, 2, 3 or 4, in which the wall of the cavity opposite the disk cleaning member includes a stationary second disk cleaning surface (45), whereby both sides of the disk are cleaned when the movable disk cleaning member is moved into cleaning contact with the disk.

6. A disk drive (60) for a cartridge according to any preceding claim, including a rotatable collet member (64) for mechanically clamping the disk for rotation about an access with the through-hole, and a movable force member (80), operable after the collet member has clamped the disk, to move the disk cleaning member into cleaning contact with the disk.

## Patentansprüche

Starre Diskettenkassette (10) mit einer starren Umhüllung (13, 17), welche einen flachen, im wesentlichen geschlossenen Hohlraum bestimmt, wobei die Umhüllung ein Durchgangsloch (15, 16) und wenigstens eine Kopfaufnahmeöffnung (21, 22) im flachen Teil des Gehäuses aufweist, einer im wesentlichen flachen Diskette (18), welche nicht-entfernbar lose in dem Hohlraum aufgenommen ist, wobei die Diskette eine auf das Durchgangsloch ausgerichtete Anbringungsöffnung (19), welche jedoch in ihren Abmessungen kleiner als das Durchgangsloch ist, aufweist, und einem starren, beweglichen Diskettenreinigungselement (29; 50; 129), welches als Teil der starren Umhüllung ausgebildet ist, wobei das Reinigungselement von der Diskette im Abstand liegt, wenn die Kassette mit dem Diskettenantriebsmechanismus nicht im Eingriff ist, und in den Hohlraum und in Reinigungsberührung mit der Diskette bewegbar ist, wenn die Kassette mit dem Diskettenantriebsmechanismus im Eingriff ist.

2. Kassette nach Anspruch 1, bei welcher das Diskettenreinigungselement (29; 129) ein loses, starres Gehäuseteil umfaßt, welches eine Reinigungsfläche (32, 46) auf seiner dem Hohlraum zugekehrten Seite aufweist, wobei das starre Gehäuse eine durch das Gehäuseteil verschlossene Öffnung (27; 127) aufweist, wobei das Gehäuseteil gegenüber einer Bewegung aus der Öffnung heraus durch einschließende Gehäuseflächen (28; 128), welche in der starren Umhüllung ausgebildet sind, eingezwängt ist.

3. Kassette nach Anspruch 2, bei welcher die Flächen (28; 128) des starren Gehäuses, welche das Gehäuseteil einschließen, über die Öffnung (27, 127) vorspringen und das Teil in der Öffnung gefangen halten.

4. Kassette nach Anspruch 1, bei welcher das Diskettenreinigungselement (50) ein starres Gehäuseteil umfaßt, welches mit einer Reinigungsfläche (32; 46) auf seiner dem Hohlraum zugekehrten Seite zusammenwirkt, wobei das Gehäuseteil mit der starren Umhüllung durch ein Gelenk (51) verminderter Dicke verbunden ist.

5. Kassette nach Anspruch 1, 2, 3 oder 4, bei welcher die dem Diskettenreinigungselement gegenüberliegende Wand des Hohlraums eine stationäre zweite Diskettenreinigungsfläche (45) aufweist, wodurch beide Seiten der Diskette gereinigt werden, wenn das bewegliche Diskettenreinigungselement in Reinigungsberührung mit der Diskette bewegt ist.

6. Diskettenantrieb (60) für eine Kassette nach irgendeinem vorstehenden Anspruch, welcher ein drehbares Spannteil (64) für ein mechanisches Klemmen der Diskette für ein Drehen um eine Achse mit dem Durchgangsloch und ein bewegliches Drückelement (80) aufweist, welches, nachdem das Spannteil die Diskette geklemmt hat, so betreibbar ist, daß das Diskettenreinigungselement in Berührung mit der Diskette bewegt wird.

## Revendications

1. Cartouche rigide pour disque souple (10) comprenant une pochette rigide (13, 17) délimitant une cavité fermée sensiblement plane, la pochette comprenant un orifice traversant (15, 16) et au moins une ouverture recevant une tête (21, 22) dans une partie plane du boîtier, un disque souple généralement plat (18) logé sans être serré de façon inamovible à l'intérieur de la cavité, le disque comprenant un orifice de montage (19) aligné avec l'orifice traversant, mais de dimension inférieure à cet orifice traversant, et un élément de nettoyage du disque mobile, rigide (29; 50; 129) constituant une partie de la pochette rigide, l'élément de nettoyage étant écarté du disque quand la cartouche n'est pas engagée dans le mécanisme de l'unité de disque et étant adapté à être déplacé dans la cavité et à venir en contact de nettoyage avec le disque lorsque la cartouche est engagée sur le mécanisme de l'unité de disque.

2. Cartouche selon la revendication 1, dans laquelle l'élément de nettoyage du disque (29; 129) comprend une partie de boîtier rigide libre qui possède une surface de nettoyage (32; 46) sur sa face tournée vers la cavité, le boîtier rigide ayant une ouverture (27; 127) fermée par la pièce du boîtier, la pièce du boîtier étant empêchée d'effectuer un mouvement qui la sorte de l'ouverture par des surfaces de confinement du boîtier (28; 128) formées dans la pochette rigide.

3. Cartouche selon la revendication 2, dans laquelle les surfaces (28; 128) du boîtier rigide qui maintiennent la pièce du boîtier sont en porte-à-faux sur l'ouverture (27; 127) afin de maintenir la pièce dans l'ouverture.

4. Cartouche selon la revendication 1, dans laquelle l'élément de nettoyage du disque (50) comprend une pièce de boîtier rigide qui coopère avec une surface de nettoyage (32; 46) sur sa face tournée vers la cavité, la pièce du boîtier étant connectée à la pochette rigide par une charnière d'épaisseur réduite (51).

5. Cartouche selon l'une des revendications 1, 2, 3 ou 4, dans laquelle la paroi de la cavité opposée à l'élément de nettoyage du disque comprend une seconde surface fixe de nettoyage du disque (45), de façon que les deux faces du disque soient nettoyées quand l'élément mobile de nettoyage du disque est amené en contact de nettoyage avec le disque.

6. Unité de disque (60) pour une cartouche selon l'une des revendications précédentes, comprenant un élément de mandrin tournant (64) destiné à maintenir mécaniquement le disque en rotation grâce à un accès par le trou traversant et un élément mobile exerçant une force (80) susceptible d'agir lorsque l'élément de mandrin a serré le disque pour amener l'élément de nettoyage du disque en contact de nettoyage avec le disque.

FIG. 1

FIG. 2

FIG. 3

FIG. 4

FIG. 5

FIG. 6

32

29

17

28

31

28

31

31

28

31

27

FIG. 7

33

13

41

A

39

43

44

42

18

17

FIG. 8

FIG. 9

FIG. 10

FIG. 11

FIG. 12

FIG. 13

FIG. 14